# EUROPEAN PATENT APPLICATION

(11) **EP 4 535 501 A1**
(43) Date of publication of application: **09.04.2025**
(21) Application number: 23814931.4
(22) Date of filing: 12.05.2023
(51) Int. Cl.: H01M 10/42

(54) **POSITIVE ELECTRODE LITHIUM-SUPPLEMENTING MATERIAL, AND PREPARATION METHOD THEREFOR AND USE THEREOF**

(30) Priority: 02.06.2022 CN 202210621783
(71) Applicant: Shenzhen Innovazone Technology Co., Ltd., Shenzhen, Guangdong 518000 (CN); Qujing Innovazone Technology Co., Ltd., Qujing, Yunnan 655000 (CN); Foshan Innovazone Technology Co., Ltd., Foshan, Guangdong 528000 (CN)
(72) Inventor: WAN, Yuanxin, Shenzhen, Guangdong 518000 (CN); KONG, Lingyong, Shenzhen, Guangdong 518000 (CN); ZHONG, Zeqin, Shenzhen, Guangdong 518000 (CN); ZHAO, Zhongke, Shenzhen, Guangdong 518000 (CN)
(74) Representative: MERH-IP Matias Erny Reichl Hoffmann Patentanwälte PartG mbB
(86) International application number: PCT/CN2023/093946
(87) International publication number: WO 2023/231746

(57) **Abstract**

A cathode lithium-supplementing material and preparation method and application thereof are provided. The cathode lithium-supplementing material includes the cathode lithium-supplementing material includes a lithium-containing core and a coating layer coated on a surface of the lithium-containing core, the material of the coating layer is selected from a semi-finished carbon layer containing hydroxyls. The provided coating layer, on the one hand, plays a role in isolating harmful components such as water and carbon dioxide in the air, thereby effectively ensuring the stability of the lithium-rich material contained in the cathode composite material layer; on the other hand, the coating layer is the semi-finished carbon layer containing hydroxyls, which has a partial conductivity function and can improve the conductivity of the cathode lithium-supplementing material; moreover, the semi-finished carbon layer containing hydroxyls has high toughness, which is conducive to completely coating the lithium-containing core, ensures the effect of isolating the cathode lithium-supplementing material from water vapor during storage, thereby having stable performance and being beneficial for the widespread application.

## Description

The present application claims priority of the Chinese patent application filed with the China Patent Office on June 2, 2022, with an application number 202210621783.X and titled " Cathode lithium-supplementing material and preparation method and application thereof ", the entire contents of which are incorporated by reference in the present application.

### TECHNICAL FIELD

The present application relates to the technical field of battery technology, more particularly to a cathode lithium-supplementing material and preparation method and application thereof

### BACKGROUND

Due to the rapid development of the consumer electronics and electric vehicle industries, higher requirements are placed on the performance of new batteries. In order to achieve longer standby time and battery life, new improved methods are constantly pursued to improve battery properties.

The existing cathode and anode materials of lithium-ion batteries have a large irreversible capacity loss in the initial cycle. The cathode material is mainly due that the material structure after lithium deintercation is collapsed, which reduces the number of lithium ions that can be accommodated, and results in low initial coulombic efficiency. The anode material, especially the application of new anode materials (such as silicon or tin), has greatly improved the capacity, but the irreversible capacity is as high as more than 30%, which significantly reduces the battery capacity. In order to solve the problem of irreversible capacity loss in the initial cycle, researchers have developed lithium supplementing technology, which adds new lithium sources to the electrode material by supplementing lithium to compensate for the loss of active lithium caused by the formation of SEI film in the initial cycle. In recent years, cathode lithium supplementing has gradually attracted people's attention because of its relatively stable, easy to synthesize, low price and high lithium supplementing capacity.

Lithium-containing cores are widely used as additives for lithium-supplementing of cathode materials. The addition of lithium-containing cores can greatly improve the energy density of lithium-ion batteries. However, during the preparation process of lithium-containing cores, the lithium-containing cores are easily melted in the sintering treatment to form a plate-like hardening material, which is not easy to be removed from the reaction container, and meanwhile causes the product to be hard and difficult to break, and is unable to achieve continuous production. On the other hand, the lithium-containing core is extremely sensitive to moisture and carbon dioxide in the environment, which can easily lead to deterioration, resulting in problems such as processing gel and later battery gas production. Due to the poor conductivity of oxides, the use of metal oxide coatings can alleviate the sensitivity of the material surface interface to the environment, but have poor kinetics and difficulty in controlling the coating uniformity, resulting in poor use effect.

### SUMMARY

It is an objective of the embodiments of the present application to provide a cathode lithium-supplementing material and preparation method and application thereof, aiming to solve the problems in the prior art that the cathode lithium-supplementing material is easy to sinter and form a plate-like hardening material due to high-temperature sintering treatment during preparation, and the product has high hardness and the crystal form is easy to change.

Technical solutions adopted in embodiments of the present application are as follows:

A first aspect of the present application provides a cathode lithium-supplementing material, which comprises a lithium-containing core and a coating layer coated on a surface of the lithium-containing core. A material of the coating layer is selected from a semi-finished carbon layer containing hydroxyls.

A second aspect of the present application provides a preparation method of a cathode lithium-supplementing material, comprising the following steps:
preparing a lithium peroxide;
mixing an iron source, a lithium source, and a doping element source according to an element stoichiometry in a molecular formula LiₐFeO_{b}·cMₓO_{y}, to obtain a precursor, where in the molecular formula, c is a molar number, 4.5≤a≤5.5, a and b satisfy a formula a=2b-3, 1≤y/x≤2.5, and M is at least one element selected from Co, Ni, Mn, V, Cu, Mo, Al, Ti, Mg, Zr, and Si;
performing a semi-liquid phase sintering treatment on the precursor to obtain a lithium-containing core;
providing a carbon source for semi-dehydration carbonization treatment under an inert atmosphere to obtain a semi-carbonized carbon source; and
performing fusion treatment on the lithium-containing core and the semi-carbonized carbon source to form a coating layer on a surface of the lithium-containing core, whereby obtaining the cathode lithium-supplementing material.

A third aspect of the present application provides a cathode plate. The cathode plate comprises a cathode current collector and a cathode active material layer located on the cathode current collector, the cathode active material layer comprises a cathode active material, a binder, a conductive agent, and a cathode lithium-supplementing material. The cathode lithium-supplementing material is selected from the cathode lithium-supplementing material provided by the present application or prepared by the preparation method of the cathode lithium-supplementing material provided by the present application.

A fourth aspect of the present application provides a secondary battery. The secondary battery comprises the cathode plate

Beneficial effects of the cathode lithium-supplementing material provided by embodiments of the present application are summarized as follows: the cathode lithium-supplementing material comprises the lithium-containing core and the coating layer coated on the surface of the lithium-containing core, the material of the coating layer is selected from the semi-finished carbon layer containing hydroxyls. The provided coating layer, on the one hand, plays a role in isolating harmful components such as water and carbon dioxide in the air, thereby effectively ensuring the stability of the lithium-rich material contained in the cathode composite material layer; on the other hand, the coating layer is the semi-finished carbon layer containing hydroxyls, which has a partial conductivity function and can improve the conductivity of the cathode lithium-supplementing material; moreover, the semi-finished carbon layer containing hydroxyls has high toughness, which is conducive to completely coating the lithium-containing core, ensures the effect of isolating the cathode lithium-supplementing material from water vapor during storage, thereby having stable performance and being beneficial for the widespread application.

Beneficial effects of the preparation method of the cathode lithium-supplementing material provided by embodiments of the present application are summarized as follows: in the preparation method, the lithium source, the iron source, and the doping element source are used as raw materials according to a general chemical formula, and the semi-liquid phase sintering treatment is performed to obtain the lithium-containing core. The semi-liquid phase sintering treatment is mainly used to make the lithium source gradually change from a solid to a flowable molten body during the sintering process, so as to directly react with the iron source to achieve a sufficient reaction effect, solve the problem of Li/Fe mixing uniformity, and the lithium source comprises lithium peroxide, so that the lithium source is not easy to melt and form a plate-like hardening material during the sintering process, which solves the problem that the plate-like hardening material may be easily sintered and formed during the high-temperature sintering process making it difficult to be demolded. In addition, a carbon source is provided for semi-dehydration carbonization treatment to form the semi-carbonized carbon source, and then the lithium-containing core and the semi-carbonized carbon source are fused to form the coating layer on the surface of the lithium-containing core. Compared with the method of using a metal oxide coating layer in the prior art, the coating layer prepared by the fusion treatment method can solve the problem of lithium ion migration kinetics caused by poor interface conductivity, and protect the lithium-containing core from contacting with water vapor and carbon dioxide in the air before storage, assembling, and packaging of the battery. The preparation method of the cathode lithium-supplementing material is used to prepare the cathode lithium-supplementing material, which can fully mix the raw materials, avoid crystal changes of the materials, reduce the hardness of the lithium-supplementing material, and realize continuous production. In addition, the prepared coating layer ensures the stability of the lithium-supplementing performance of the cathode lithium-supplementing additive. After being assembled and packaged to form a battery, the cathode lithium-supplementing material can be dissolved in the electrolyte to supplement lithium to the cathode of the battery, ensuring that the lithium deinterclation from the cathode lithium-supplementing material is not affected, and the service life of the battery is improved.

Beneficial effects of the cathode plate provided by embodiments of the present application are summarized as follows: the cathode plate comprises the cathode current collector and the cathode active material layer located on the cathode current collector, and the cathode active material layer comprises the cathode lithium-supplementing material. Based on that the provided cathode lithium-supplementing material can isolate harmful components such as water and carbon dioxide in the air and have certain conductivity, it is ensured that the prepared cathode plate has good stability and certain conductivity, can achieve the effect of supplementing lithium for the cathode of the battery after being assembled to form the battery, improve the service life of the battery, maintain the abundance of lithium ions in the battery system, improve the initial coulombic efficiency and overall electrochemical performance of the battery, and achieve truly efficient lithium-supplementing.

The beneficial effects of the secondary battery provided by embodiments of the present application are summarized as follows: the secondary batter comprises the provided cathode plate, and the cathode plate comprises the cathode lithium-supplementing material prepared by the preparation method of the cathode lithium-supplementing material. In this way, it is ensured that the cathode lithium-supplementing material in the cathode plate is not affected by water vapor and carbon dioxide in the air before packaging into the secondary battery, so that the lithium ions in the assembled secondary battery system are stable, the overall electrochemical performance of the battery is improved, thus having good cycle performance and lithium-supplementing performance, and being beneficial to the widespread application.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

It should be noted that "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

The terms used in the embodiments of the present application are only for the purpose of describing specific embodiments, and are not intended to limit the present application. The singular forms of "a" and "the" used in the embodiments of the present application and the appended claims are also intended to comprise plural forms unless the context clearly indicates other meanings.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

In order to illustrate the technical solutions provided by the present application, the following is a detailed description in combination with specific drawings and embodiments.

A first aspect of embodiments of the present application provides a cathode lithium-supplementing material, comprising a lithium-containing core and a coating layer coated on a surface of the lithium-containing core. A material of the coating layer is selected from a semi-finished carbon layer containing hydroxyls.

The cathode lithium-supplementing material provided in the first aspect of embodiments of the present application comprises the lithium-containing core and the coating layer coated on the surface of the lithium-containing core, the material of the coating layer is selected from the semi-finished carbon layer containing hydroxyls. The provided coating layer, on the one hand, plays a role in isolating harmful components such as water and carbon dioxide in the air, thereby effectively ensuring the stability of the lithium-rich material contained in the cathode composite material layer; on the other hand, the coating layer is the semi-finished carbon layer containing hydroxyls, which has a partial conductivity function and can improve the conductivity of the cathode lithium-supplementing material; moreover, the semi-finished carbon layer containing hydroxyls has high toughness, which is conducive to completely coating the lithium-containing core, ensures the effect of isolating the cathode lithium-supplementing material from water vapor during storage, thereby having stable performance and being beneficial for the widespread application.

In some embodiments, a structural formula of the semi-finished carbon layer is C_{d}Hₑ(OH)_{f}, where 0 < d < 6, 0 < e < 3, and 0 < f < 4. In such condition, the semi-carbonized carbon source retains a small amount of hydroxyl bonds and has partial conductivity function. If the carbon layer is completely carbonized, the amorphous carbon formed in such condition is a rigid brittle material, which would be easily destroyed by mechanical high-speed shearing during the subsequent high-speed fusion treatment, and would be difficult to provide a good coating effect. The semi-carbonized carbon source has just the right toughness and can provide a good coating effect and can improve the conductivity of the material.

In some embodiments, a structural formula of the lithium-containing core is LiₐFeO_{b·}cMₓO_{y}, where c in the structural formula represents a molar number, and 4.5≤a≤5.5; a and b satisfy a formula a=2b-3; 1≤y/x≤2.5; and M is at least one element selected from Co, Ni, Mn, V, Cu, Mo, Al, Ti, Mg, Zr, and Si.

In some specific embodiments, the lithium-containing core comprises but is not limited to Li_{4.98}FeO_{3.99}·0.005Al₂O₃, Li_{4.98}FeO_{3.99}·0.015NiO, Li_{5.06}FeO_{4.04}·0.01CoO, Li_{5.02}FeO_{4.01}·0.005SiO₂.

In some embodiments, a particle size of the cathode lithium-supplementing material is 1 µm to 20 µm. In some specific embodiments, the particle size of the cathode lithium-supplementing material comprises but is not limited to 2µm, 3.5µm, 5µm, 5.5µm, 6µm, 6.5µm, 7µm, 7.5µm, 8µm, 8.5µm, 9µm, 9.5µm, 10µm, 11µm, 12µm, 13µm, 14µm, 15µm, 16µm, 17µm, 18µm, 19µm, and 20µm.

In some embodiments, a thickness of the coating layer is 5 nm to 100 nm. In some specific embodiments, the thickness of the coating layer comprises but is not limited to 5nm, 10nm, 15nm, 20nm, 30nm, 40nm, 50nm, 60nm, 70nm, 80nm, 90nm, and 100nm.

In some embodiments, a specific surface area of the cathode lithium-supplementing material is 1 m²/g to 10 m²/g. In some specific embodiments, the specific surface area of the cathode lithium-supplementing material comprises but is not limited to 1m²/g, 2 m²/g, 3 m²/g, 4 m²/g, 5 m²/g, 6 m²/g, 7 m²/g,8 m²/g, 9 m²/g, and 10 m²/g.

A second aspect of embodiments of the present application provides a preparation method of a cathode lithium-supplementing material, comprising the following steps:
S01, preparing a lithium peroxide;
S02, mixing an iron source, a lithium source, and a doping element source according to an element stoichiometry in a molecular formula LiₐFeO_{b}·cMₓO_{y}, to obtain a precursor, where in the molecular formula, c is a molar number, 4.5≤a≤5.5, a and b satisfy a formula a=2b-3, 1≤y/x≤2.5, and M is at least one element selected from Co, Ni, Mn, V, Cu, Mo, Al, Ti, Mg, Zr, and Si;
S03, performing a semi-liquid phase sintering treatment on the precursor to obtain a lithium-containing core;
S04, providing a carbon source for semi-dehydration carbonization treatment under an inert atmosphere to obtain a semi-carbonized carbon source; and
S05, performing fusion treatment on the lithium-containing core and the semi-carbonized carbon source to form a coating layer on a surface of the lithium-containing core, whereby obtaining the cathode lithium-supplementing material.

The second aspect of embodiments of the present application provides the preparation method of the cathode lithium-supplementing material. In the preparation method, the lithium source, the iron source, and the doping element source are used as raw materials, and the semi-liquid phase sintering treatment is performed to obtain the lithium-containing core. The semi-liquid phase sintering treatment is mainly used to make the lithium source gradually change from a solid to a flowable molten body during the sintering process, so as to directly react with the iron source to achieve a sufficient reaction effect, solve the problem of Li/Fe mixing uniformity, and the lithium source comprises lithium peroxide, so that the lithium source is not easy to melt and form a plate-like hardening material during the sintering process, which solves the problem that the plate-like hardening material may be easily sintered and formed during the high-temperature sintering process making it difficult to be demolded. In addition, a carbon source is provided for semi-dehydration carbonization treatment to form the semi-carbonized carbon source, and then the lithium-containing core and the semi-carbonized carbon source are fused to form the coating layer on the surface of the lithium-containing core. Compared with the method of using a metal oxide coating layer in the prior art, the coating layer prepared by the fusion treatment method can solve the problem of lithium ion migration kinetics caused by poor interface conductivity, and protect the lithium-containing core from contacting with water vapor and carbon dioxide in the air before storage, assembling, and packaging of the battery. The preparation method of the cathode lithium-supplementing material is used to prepare the cathode lithium-supplementing material, which can fully mix the raw materials, avoid crystal changes of the materials, reduce the hardness of the lithium-supplementing material, and realize continuous production. In addition, the prepared coating layer ensures the stability of the lithium-supplementing performance of the cathode lithium-supplementing additive. After being assembled and packaged to form a battery, the cathode lithium-supplementing material can be dissolved in the electrolyte to supplement lithium to the cathode of the battery, ensuring that the lithium deinterclation from the cathode lithium-supplementing material is not affected, and the service life of the battery is improved.

In step S01, lithium peroxide is prepared. The main purpose of providing lithium peroxide is to prevent the effect of melting, and to ensure that in the subsequent high-temperature reaction process, the lithium source will not be molten during the high-temperature sintering process and form a plate-like hardening material, and the hardness of the melt will not be extremely high. Meanwhile, it is ensured that the obtained product will not be difficult to be removed from the sagger due to the hardening.

In some embodiments, the step of preparing the lithium peroxide comprises:
S011, providing and mixing an anhydrous lithium hydroxide and hydrogen peroxide, and performing a first heating treatment to obtain a first mixture;
S012, mixing the first mixture with an organic solvent to obtain a lithium peroxide precipitate containing a crystal water; and
S013, performing a second heating treatment on the lithium peroxide precipitate containing the crystal water to obtain the lithium peroxide.

In S011, the anhydrous lithium hydroxide and hydrogen peroxide are provided and mixed, and a molar ratio of the anhydrous lithium hydroxide to the hydrogen peroxide is 1.1 to 1.2:1. The molar ratio of the two reactants is controlled so that the anhydrous lithium hydroxide and hydrogen peroxide can fully react. In some specific embodiments, the molar ratio of the anhydrous lithium hydroxide to hydrogen peroxide is 1.1:1.

In some embodiments, a first heating treatment is performed to obtain a first mixture. A temperature of the first heating treatment is 90°C to 120°C, and a time of the first heating treatment is 15 min to 60 min. The first heating treatment is mainly to ensure that the anhydrous lithium hydroxide and hydrogen peroxide react completely.

In some specific embodiments, the temperature of the first heating treatment comprises but is not limited to 90°C, 100°C, 110°C, and 120°C; and the time of the first heating treatment comprises but is not limited to 15 min, 20 min, 25 min, 30 min, 35 min, 40 min, 45 min, 50 min, 55 min, and 60 min.

In S012, the first mixture and the organic solvent are mixed to obtain a lithium peroxide precipitate containing crystal water. When the organic solvent is added, the lithium peroxide precipitate containing the crystal water is precipitated in the first mixture.

In some embodiments, a volume ratio of the organic solvent to the hydrogen peroxide is 0.8 to 1.4:1. In some specific embodiments, the volume ratio of the organic solvent to hydrogen peroxide is selected from 0.8:1, 0.9:1, 1:1, 1.1:1, 1.2:1, 1.3:1, and 1.4:1.

In some embodiments, the organic solvent comprises but is not limited to anhydrous ethanol, and anhydrous ethanol is provided to be mixed with the first mixture, and the yield of the precipitated lithium peroxide precipitate containing crystal water is high.

In S013, the lithium peroxide precipitate containing the crystal water is subjected to a second heating treatment to obtain lithium peroxide. The second heating treatment is mainly used for high-temperature treatment to remove the crystal water.

In some embodiments, a temperature of the second heating treatment is 400°C to 450°C, and a time of the second heating treatment is 1 hr to 5 hrs. The treatment under such treatment temperature can completely remove the crystal water, and lithium peroxide free of the crystal water can be obtained for use.

In some specific embodiments, the temperature of the second heat treatment comprises but is not limited to 400°C, 410°C, 420°C, 430°C, 440°C, and 450°C; and the time for the second heat treatment comprises but is not limited to 1 hour, 2 hrs, 3 hrs, 4 hrs, and 5 hrs.

In step S02, according to the molecular formula LiₐFeO_{b}·cMₓO_{y}, in the molecular formula, C represents a molar number, and 4.5≤a≤5.5; a and b satisfy a formula a=2b-3; 1≤y/x≤2.5; M is at least one element of Co, Ni, Mn, V, Cu, Mo, Al, Ti, Mg, Zr, and Si.

In some embodiments, the lithium source further comprises at least one of lithium nitrate, lithium carbonate, lithium acetate, lithium oxalate, lithium borate, lithium phosphate, lithium chloride, lithium hydroxide, lithium peroxide, and lithium oxide.

In some embodiments, the iron source comprises an iron salt. Specifically, the iron source is iron nitrate.

In some embodiments, the doping element source comprises at least one of a Co source, a Ni source, a Mn source, a V source, a Cu source, a Mo source, an Al source, a Ti source, a Mg source, a Zr source, and a Si source.

In some specific embodiments, the Co source may be at least one of cobalt oxide, cobalt nitrate, cobalt chloride, cobalt hydroxide, cobalt acetate, cobalt hydroxide, and cobalt carbonate.

In some specific embodiments, the Ni source may be at least one of nickel oxide, nickel nitrate, nickel chloride, nickel hydroxide, nickel acetate, and nickel hydroxide.

In some specific embodiments, the Mn source may be at least one of manganese dioxide and manganese hydroxide.

In some specific embodiments, the V source may be at least one of vanadium pentoxide, vanadium oxynitrate, and ammonium vanadate.

In some specific embodiments, the Cu source may be at least one of copper oxide, copper nitrate, copper chloride, copper hydroxide, copper acetate, copper hydroxide, and copper carbonate.

In some specific embodiments, the Mo source may be at least one of molybdenum trihydroxide, molybdenum tetrahydroxide, and molybdenum pentahydroxide.

In some specific embodiments, the Al source may be at least one of aluminum oxide, aluminum nitrate, aluminum chloride, aluminum hydroxide, aluminum acetate, and aluminum hydroxide.

In some specific embodiments, the Ti source may be at least one of titanium dioxide and titanium chloride.

In some specific embodiments, the Mg source may be at least one of magnesium oxide and magnesium hydroxide.

In some specific embodiments, the Zr source may be at least one of zirconium oxide, zirconium nitrate, zirconium chloride, zirconium hydroxide, zirconium acetate, zirconium hydroxide, and zirconium carbonate.

In some specific embodiments, the Si source may be at least one of silicon monoxide, silicon dioxide, and organic silicon.

In some embodiments, a mass percentage of lithium peroxide in the lithium source is 30 wt% to 70 wt%. Controlling the mass percentage of lithium peroxide in the lithium source to 30 wt% to 70 wt% can ensure that no plate-like hardening material will be formed during the sintering process.

In some embodiments, in the step of mixing the iron source, the lithium source, and the doping element source, a high-speed shearing method is used for the mixing, and the high-speed shearing is performed at a speed of 2000 rpm to 5000 rpm for a time of 20 min to 40 min. The use of high-speed shearing method for mixing can ensure that the components are mixed evenly.

In some specific embodiments, the speed of the high-speed shearing comprises but is not limited to 2000 rpm, 3000 rpm, 4000 rpm, and 5000 rpm; the time of the high-speed shearing comprises but is not limited to 20 min, 30 min, and 40 min.

In step S03, the precursor is subjected to semi-liquid phase sintering treatment to obtain the lithium-containing core. The semi-liquid phase sintering treatment mainly allows the lithium source to gradually change from a solid to a flowable molten body during the high-temperature sintering process, so that lithium source can directly react with the iron source to achieve a sufficient reaction effect.

In some embodiments, a temperature of the semi-liquid phase sintering treatment is performed at a temperature of 600°C to 950°C for a time of 2 hrs to 15 hrs. The use of semi-liquid phase sintering treatment can ensure that Li/Fe is mixed evenly and improve the mixing effect of the elements.

In some specific embodiments, the temperature of the semi-liquid phase sintering process comprises but is not limited to 600°C, 610°C, 620°C, 630°C, 640°C, 650°C, 660°C, 670°C, 680°C, 690°C, 700°C, 710°C, 720°C, 730°C, 740°C, 750°C, 760°C, 770°C, 780°C, 790°C, 800°C, 810°C, 820°C, 830°C, 840°C, 850°C, 860°C, 870°C, 880°C, 890°C, 900°C, 910°C, 920°C, 930°C, 940°C, 950°C. The time of the semi-liquid phase sintering treatment comprises but is not limited to 2 hrs, 3 hrs, 4 hrs, 5 hrs, 6 hrs, 7 hrs, 8 hrs, 9 hrs, 10 hrs, 11 hrs, 12 hrs, 13 hrs, 14 hrs, and 15 hrs.

In some embodiments, a reaction process of the semi-liquid phase sintering treatment is as follows:

Fe source + Li₂O₂/Li source + doping element M→7LiₐFeO_{b}·cMₓO_{y}.

In some embodiments, in the step of performing the semi-liquid phase sintering treatment, a mullite sagger or a corundum sagger is used to perform the semi-liquid phase sintering treatment in a roller kiln or a rotary kiln.

In step S04, a carbon source is provided under an inert atmosphere for semi-dehydration carbonization treatment to obtain the semi-carbonized carbon source. The semi-carbonized carbon source provided is in a structure of CₓH_{y}(OH)_{z}. In such condition, the semi-carbonized carbon source retains a small amount of hydroxyl bonds and has partial conductivity function. If the carbon layer is completely carbonized, the amorphous carbon formed in such condition is a rigid brittle material, which would be easily destroyed by mechanical high-speed shearing during the subsequent high-speed fusion treatment, and would be difficult to provide a good coating effect. The semi-carbonized carbon source has just the right toughness and can provide a good coating effect and can improve the conductivity of the material.

In some embodiments, the inert atmosphere comprises but is not limited to a nitrogen atmosphere, a helium atmosphere, and a neon atmosphere.

In some embodiments, the semi-dehydration carbonization treatment is performed at a temperature of 300°C to 400°C for a time of 2 hrs to 6 hrs. Based on the inert atmosphere, the treatment at this temperature can ensure that the carbon source is semi-dehydrated and semi-carbonized to obtain a semi-carbonized carbon source.

In some embodiments, the carbon source comprises at least one of glucose, sucrose, and a polyethylene glycol.

In step S04, the lithium-containing core and the semi-carbonized carbon source are performed with fusion treatment to form a coating layer on the surface of the lithium-containing core, whereby obtain a cathode lithium-supplementing material.

In some embodiments, a mass ratio of the lithium-containing core to the carbon source is 100 : (10 to 20).. Controlling the mass ratio of the lithium-containing core to the carbon source can achieve that the carbon source effectively and completely wraps the lithium-containing core to obtain a coating layer.

In some specific embodiments, the mass ratio of the lithium-containing core to the carbon source is 100:10, 100:11, 100:12, 100:13, 100:14, 100:15, 100:16, 100:17, 100:18, 100:19, and 100:20.

In step S05, the lithium-containing core and the semi-carbonized carbon source are fused to form the coating layer on the surface of the lithium-containing core. Compared with the method of using a metal oxide coating layer in the prior art, the coating layer prepared by the fusion treatment method can solve the problem of lithium ion migration kinetics caused by poor interface conductivity, and protect the lithium-containing core from contacting with water vapor and carbon dioxide in the air before storage, assembling, and packaging of the battery.

In some embodiments, an inert gas is provided during the fusion treatment to ensure that no impurities are introduced into the reaction system.

In some embodiments, the fusion treatment is performed at a speed of 1500 rpm to 5000 rpm for a time of 5 min to 60 min. In some specific embodiments, the fusion treatment speed comprises but is not limited to 1500 rpm, 2000 rpm, 2500 rpm, 3000 rpm, 3500 rpm, 4000 rpm, 4500 rpm, and 5000 rpm. The fusion treatment time is 5 min, 10 min, 15 min, 20 min, 25 min, 30 min, 35 min, 40 min, 45 min, 50 min, 55 min, and 60 min.

A third aspect of embodiments of the present application provides a cathode plate, the cathode plate comprises a cathode current collector and a cathode active material layer located on the cathode current collector, the cathode active material layer comprises a cathode active material, a binder, a conductive agent, and a cathode lithium-supplementing material. The cathode lithium-supplementing material is selected from the cathode lithium-supplementing additive or prepared by the preparation method of a cathode lithium-supplementing additive.

The cathode plate provided in the third aspect of embodiments of the present application comprises the cathode current collector and the cathode active material layer located on the cathode current collector, and the cathode active material layer comprises the cathode lithium-supplementing material. Based on that the provided cathode lithium-supplementing material can isolate harmful components such as water and carbon dioxide in the air and have certain conductivity, it is ensured that the prepared cathode plate has good stability and certain conductivity, can achieve the effect of supplementing lithium for the cathode of the battery after being assembled to form the battery, improve the service life of the battery, maintain the abundance of lithium ions in the battery system, improve the initial coulombic efficiency and overall electrochemical performance of the battery, and achieve truly efficient lithium-supplementing.

In some embodiments, a mass percentage of the cathode lithium-supplementing material in the cathode active material layer is 0.5 wt% to 15 wt%. In some specific embodiments, the mass percentage of the cathode lithium-supplementing material in the cathode active material layer comprises but is not limited to 0.5 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, and 15 wt%.

In some embodiments, the cathode active material layer further comprises a cathode active material; in some specific embodiments, the cathode active material comprises at least one of lithium cobalt, lithium iron phosphate, lithium manganese iron phosphate iron, lithium manganate, nickel cobalt lithium manganate, and lithium nickel manganate.

In some embodiments, the cathode active material layer further comprises a binder. The binder comprises at least one of a polyvinylidene chloride, a soluble polytetrafluoroethylene, a styrene-butadiene rubber, a hydroxypropyl methylcellulose, a methylcellulose, a carboxymethyl cellulose, a polyvinyl alcohol, a acrylonitrile copolymer, a sodium alginate, a chitosan, and a chitosan derivative.

In some embodiments, a mass percentage of the binder in the cathode active material layer is 0.3 wt% to 7 wt%.

In some embodiments, the cathode active material layer further comprises a conductive agent. The conductive agent comprises at least one of a graphite, a carbon black, an acetylene black, a graphene, a carbon fiber, and a carbon nanotube.

In some embodiments, a mass percentage of the conductive agent in the cathode active material layer is 0.2 wt% to 7 wt%.

In some embodiments, the cathode current collector comprises but is not limited to at least one of an aluminum foil, a carbon-coated aluminum foil, an iron foil, a tin foil, a zinc foil, a nickel foil, a titanium foil, and a manganese foil.

In a specific embodiment, the preparation process of the cathode includes the following steps: mixing the cathode active material, the cathode lithium-supplementing material, the conductive agent, and the binder to obtain an electrode slurry, coating the electrode slurry on the current collector, and performing drying, rolling, die cutting and other steps to obtain the cathode plate.

A fourth aspect of embodiments of the present application provides a secondary battery, the secondary battery comprises a cathode plate.

The fourth aspect of embodiments of the present application provides the secondary battery, which comprises the provided cathode plate, and the cathode plate comprises the cathode lithium-supplementing material prepared by the preparation method of the cathode lithium-supplementing material. In this way, it is ensured that the cathode lithium-supplementing material in the cathode plate is not affected by water vapor and carbon dioxide in the air before packaging into the secondary battery, so that the lithium ions in the assembled secondary battery system are stable, the overall electrochemical performance of the battery is improved, thus having good cycle performance and lithium-supplementing performance, and being beneficial to the widespread application.

The following is explanations in conjunction with specific examples.

### Example A1

### Cathode lithium-supplementing material and preparation method thereof

The provided cathode lithium-supplementing material comprises a lithium-containing core and a coating layer coated on a surface of the lithium-containing core. A structural formula of the lithium-containing core is Li_{4.98}FeO_{3.99}·0.005Al₂O₃. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 100°C, and a reaction time was controlled to be 30 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 420°C for 5 hrs to remove the crystal water and obtain Li₂O₂.
② According to the element stoichiometry in the molecular formula Li_{4.98}FeO_{3.99}·0.005Al₂O₃, Fe(NO₃)₃, LiNO₃, Li₂O₂, and Al(NO₃)₃ were provided in a molar ratio of 1:2:1.49:0.01 for high-speed shear mixing to obtain a precursor.
③ In a nitrogen atmosphere, a sagger was provided, and the precursor was heated at a rate of 300°C/hr to a temperature of 850°C and kept at such temperature for 15 hrs. After cooling, the product was mechanically crushed and graded to obtain a lithium-containing core having the molecular formula Li_{4.98}FeO_{3.99} ·0.005Al₂O₃.
④ Glucose was collected at a weight accounting for 20 wt% of the Li_{4.98}FeO_{3.99}·0.005Al₂O₃ powder, and heated in a nitrogen atmosphere to a temperature of 350°C and kept at such temperature for 5 hrs, so as to obtain a semi-carbonized carbon source.
⑤ Under a nitrogen atmosphere, the lithium-containing core and the semi-carbonized carbon source were fused at a fusion speed of 2000 rpm for a fusion time of 30 min, so that a coating layer was formed on the surface of the lithium-containing core, and the cathode lithium-supplementing material was thereby formed.

It was known from testing that an average particle size of the carbon-coated Li_{4.98}FeO_{3.99}·0.005Al₂O₃ powder was 5.8 µm, a thickness of the carbon coating layer was 58 nm, and a Brunauer-Emmett-Teller (BET) specific surface area was 4.3 m²/g.

### Example A2

### Cathode lithium-supplementing material and preparation method thereof

The provided cathode lithium-supplementing material comprises a lithium-containing core and a coating layer coated on a surface of the lithium-containing core. A structural formula of the lithium-containing core is Li_{4.98}FeO_{3.99}·0.005Al₂O₃. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 110°C, and a reaction time was controlled to be 40 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 430°C for 4 hrs to remove the crystal water and obtain Li₂O₂.
② According to the element stoichiometry in the molecular formula Li_{4.98}FeO_{3.99}·0.005Al₂O₃, Fe(NO₃)₃, LiNO₃, LiOH, Li₂O₂, and Al(NO₃)₃ were provided in a molar ratio of 1:1.5:0.5:1.49:0.01 for high-speed shear mixing to obtain a precursor.
③ In a nitrogen atmosphere, a sagger was provided, and the precursor was heated at a rate of 300°C/hr to a temperature of 700°C and kept at such temperature for 15 hrs. After cooling, the product was mechanically crushed and graded to obtain a lithium-containing core having the molecular formula Li_{4.98}FeO_{3.99} ·0.005Al₂O₃.
④ Glucose was collected at a weight accounting for 20 wt% of the Li_{4.98}FeO_{3.99}·0.005Al₂O₃ powder, and heated in a nitrogen atmosphere to a temperature of 300°C and kept at such temperature for 2 hrs, so as to obtain a semi-carbonized carbon source.
⑤ Under a nitrogen atmosphere, the lithium-containing core and the semi-carbonized carbon source were fused at a fusion speed of 2000 rpm for a fusion time of 30 min, so that a coating layer was formed on the surface of the lithium-containing core, and the cathode lithium-supplementing material was thereby formed.

It was known from testing that an average particle size of the carbon-coated Li_{4.98}FeO_{3.99}·0.005Al₂O₃ powder was 6.5 µm, a thickness of the carbon coating layer was 70 nm, and a BET specific surface area was 2.1 m²/g.

### Example A3

### Cathode lithium-supplementing material and preparation method thereof

The provided cathode lithium-supplementing material comprises a lithium-containing core and a coating layer coated on a surface of the lithium-containing core. A structural formula of the lithium-containing core is Li_{4.98}FeO_{3.99}·0.005Al₂O₃. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 130°C, and a reaction time was controlled to be 40 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 440°C for 4 hrs to remove the crystal water and obtain Li₂O₂.
② According to the element stoichiometry in the molecular formula Li_{4.98}FeO_{3.99}·0.005Al₂O₃, Fe(NO₃)₃, Li₂CO₃, LiOH, Li₂O₂, and Al(NO₃)₃ were provided in a molar ratio of 1:0.5:1.5:1.49:0.01 for high-speed shear mixing to obtain a precursor.
③ In a nitrogen atmosphere, a sagger was provided, and the precursor was heated at a rate of 300°C/hr to a temperature of 780°C and kept at such temperature for 12 hrs. After cooling, the product was mechanically crushed and graded to obtain a lithium-containing core having the molecular formula Li_{4.98}FeO_{3.99} ·0.005Al₂O₃.
④ Glucose was collected at a weight accounting for 20 wt% of the Li_{4.98}FeO_{3.99}·0.005Al₂O₃ powder, and heated in a nitrogen atmosphere to a temperature of 320°C and kept at such temperature for 2 hrs, so as to obtain a semi-carbonized carbon source.
⑤ Under a nitrogen atmosphere, the lithium-containing core and the semi-carbonized carbon source were fused at a fusion speed of 2500 rpm for a fusion time of 40 min, so that a coating layer was formed on the surface of the lithium-containing core, and the cathode lithium-supplementing material was thereby formed.

It was known from testing that an average particle size of the carbon-coated Li_{4.98}FeO_{3.99}·0.005Al₂O₃ powder was 7.0 µm, a thickness of the carbon coating layer was 65 nm, and a BET specific surface area was 1.4 m²/g.

### Example A4

### Cathode lithium-supplementing material and preparation method thereof

The provided cathode lithium-supplementing material comprises a lithium-containing core and a coating layer coated on a surface of the lithium-containing core. A structural formula of the lithium-containing core is Li_{4.98}FeO_{3.99}·0.005Al₂O₃. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 130°C, and a reaction time was controlled to be 40 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 440°C for 4 hrs to remove the crystal water and obtain Li₂O₂.
② According to the element stoichiometry in the molecular formula Li_{4.98}FeO_{3.99}·0.005Al₂O₃, Fe(NO₃)₃, LiAC, LiOH, Li₂O₂, and Al(NO₃)₃ were provided in a molar ratio of 1:0.5:1.5:1.49:0.01 for high-speed shear mixing to obtain a precursor.
③ In a nitrogen atmosphere, a sagger was provided, and the precursor was heated at a rate of 300°C/hr to a temperature of 780°C and kept at such temperature for 12 hrs. After cooling, the product was mechanically crushed and graded to obtain a lithium-containing core having the molecular formula Li_{4.98}FeO_{3.99} ·0.005Al₂O₃.
④ Glucose was collected at a weight accounting for 20 wt% of the Li_{4.98}FeO_{3.99}·0.005Al₂O₃ powder, and heated in a nitrogen atmosphere to a temperature of 330°C and kept at such temperature for 2 hrs, so as to obtain a semi-carbonized carbon source.
⑤ Under a nitrogen atmosphere, the lithium-containing core and the semi-carbonized carbon source were fused at a fusion speed of 3000 rpm for a fusion time of 45 min, so that a coating layer was formed on the surface of the lithium-containing core, and the cathode lithium-supplementing material was thereby formed.

It was known from testing that an average particle size of the carbon-coated Li_{4.98}FeO_{3.99}·0.005Al₂O₃ powder was 8.5 µm, a thickness of the carbon coating layer was 90 nm, and a BET specific surface area was 1.1 m²/g.

### Example A5

### Cathode lithium-supplementing material and preparation method thereof

The provided cathode lithium-supplementing material comprises a lithium-containing core and a coating layer coated on a surface of the lithium-containing core. A structural formula of the lithium-containing core is Li₅FeO₄. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 130°C, and a reaction time was controlled to be 40 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 440°C for 4 hrs to remove the crystal water and obtain Li₂O₂.
② According to the element stoichiometry in the molecular formula Li₅FeO₄, Fe(NO₃)₃, LiOH, and Li₂O₂ were provided in a molar ratio of 1:3:1 for high-speed shear mixing to obtain a precursor.
③ In a nitrogen atmosphere, a sagger was provided, and the precursor was heated at a rate of 300°C/hr to a temperature of 780°C and kept at such temperature for 12 hrs. After cooling, the product was mechanically crushed and graded to obtain a lithium-containing core having the molecular formula Li₅FeO₄.
④ Glucose was collected at a weight accounting for 20 wt% of the LisFeO₄ powder, and heated in a nitrogen atmosphere to a temperature of 320°C and kept at such temperature for 2 hrs, so as to obtain a semi-carbonized carbon source.
⑤ Under a nitrogen atmosphere, the lithium-containing core and the semi-carbonized carbon source were fused at a fusion speed of 2500 rpm for a fusion time of 40 min, so that a coating layer was formed on the surface of the lithium-containing core, and the cathode lithium-supplementing material was thereby formed.

It was known from testing that an average particle size of the carbon-coated Li₅FeO₄ powder was 7.0 µm, a thickness of the carbon coating layer was 65 nm, and a BET specific surface area was 2.3 m²/g.

### Example A6

### Cathode lithium-supplementing material and preparation method thereof

The provided cathode lithium-supplementing material comprises a lithium-containing core and a coating layer coated on a surface of the lithium-containing core. A structural formula of the lithium-containing core is Li₅FeO₄. A material of the coating layer is selected from a semi-finished carbon layer containing hydroxyls.

Preparation method of the cathode lithium-supplementing material was performed as follows:
① Preparation of lithium peroxide: hydrogen peroxide/anhydrous lithium hydroxide were mixed by stirring according to a molar ratio of 1.1:1, a reaction temperature was controlled at 130°C, and a reaction time was controlled to be 40 min. Then, a certain amount of anhydrous ethanol was added to the reactor. A volume ratio of anhydrous ethanol to hydrogen peroxide is 1.2. Finally, a lithium peroxide precipitate containing crystal water was obtained. The crystals were roasted at 440°C for 4 hrs to remove the crystal water and obtain Li₂O₂.
② According to the element stoichiometry in the molecular formula Li₅FeO₄, Fe(NO₃)₃, Li₂CO₃, and Li₂O₂ were provided in a molar ratio of 1:0.5:2 for high-speed shear mixing to obtain a precursor.
③ In a nitrogen atmosphere, a sagger was provided, and the precursor was heated at a rate of 300°C/hr to a temperature of 780°C and kept at such temperature for 12 hrs. After cooling, the product was mechanically crushed and graded to obtain a lithium-containing core having the molecular formula Li₅FeO₄.
④ Glucose was collected at a weight accounting for 20 wt% of the LisFeO₄ powder, and heated in a nitrogen atmosphere to a temperature of 320°C and kept at such temperature for 2 hrs, so as to obtain a semi-carbonized carbon source.
⑤ Under a nitrogen atmosphere, the lithium-containing core and the semi-carbonized carbon source were fused at a fusion speed of 2500 rpm for a fusion time of 40 min, so that a coating layer was formed on the surface of the lithium-containing core, and the cathode lithium-supplementing material was thereby formed.

It was known from testing that an average particle size of the carbon-coated Li₅FeO₄ powder was 7.0 µm, a thickness of the carbon coating layer was 65 nm, and a BET specific surface area was 2.2 m²/g.

### Comparative example A1

### Cathode lithium-supplementing material and preparation method thereof

The provided cathode lithium-supplementing material comprises a lithium-containing core and a coating layer coated on a surface of the lithium-containing core. A material of the coating layer is selected from carbon. A structural formula of the lithium-containing core is Li_{4.98}FeO_{3.99}·0.005Al₂O₃.

Preparation method of the cathode lithium-supplementing material was performed as follows:
a sagger was provided, LiOH and Al(NO₃)₃ were provided according to a molar ratio of 5:0.01 and directly mixed, then kept at a temperature of 850°C for 15 hrs, and thereafter mechanically crushed and graded to obtain a lithium-containing core; and
a metal oxide source was provided, a dry method was adopted to prepare a nano-alumina coating layer on the lithium-containing core to obtain the cathode lithium-supplementing material.

### Comparative example A2

### Cathode lithium-supplementing material and preparation method thereof

The provided cathode lithium-supplementing material comprises a lithium-containing core and a coating layer coated on a surface of the lithium-containing core. A material of the coating layer is selected from carbon. A structural formula of the lithium-containing core is Li_{4.98}FeO_{3.99}·0.005Al₂O₃. Preparation method of the cathode lithium-supplementing material was performed as follows:
a sagger was provided, LiNO₃ and Al(NO₃)₃ were provided according to a molar ratio of 5:0.01 and directly mixed, then kept at a temperature of 850°C for 15 hrs, and thereafter mechanically crushed and graded to obtain a lithium-containing core; and
a metal oxide source was provided, a dry method was adopted to prepare a nano-silica coating layer on the lithium-containing core to obtain the cathode lithium-supplementing material.

### Comparative example A3

### Cathode lithium-supplementing material and preparation method thereof

The provided cathode lithium-supplementing material comprises a lithium-containing core and a coating layer coated on a surface of the lithium-containing core. A material of the coating layer is selected from carbon. A structural formula of the lithium-containing core is Li_{4.98}FeO_{3.99}·0.005Al₂O₃. Preparation method of the cathode lithium-supplementing material was performed as follows:
a sagger was provided, Li₂C₂O₄, LiOH and Al(NO₃)₃ were provided according to a molar ratio of 1.5: 2:0.01 and directly mixed, then kept at a temperature of 850°C for 15 hrs, and thereafter mechanically crushed and graded to obtain a lithium-containing core; and
a metal oxide source was provided, a dry method was adopted to prepare a nano-silica coating layer on the lithium-containing core to obtain the cathode lithium-supplementing material.

### Comparative example A4

### Cathode lithium-supplementing material and preparation method thereof

The provided cathode lithium-supplementing material comprises a lithium-containing core and a coating layer coated on a surface of the lithium-containing core. A material of the coating layer is selected from carbon. A structural formula of the lithium-containing core is Li_{4.98}FeO_{3.99}·0.005Al₂O₃.

Preparation method of the cathode lithium-supplementing material was performed as follows:
a sagger was provided, Li₂CO₃, LiOH and Al(NO₃)₃ were provided according to a molar ratio of 1:3:0.01 and directly mixed, then kept at a temperature of 850°C for 15 hrs, and thereafter mechanically crushed and graded to obtain a lithium-containing core; and
a metal oxide source was provided, a chemical vapor deposition method was adopted to prepare a carbon coating layer on the lithium-containing core to obtain the cathode lithium-supplementing material.

### Example B1 to Example B6

### Lithium-ion battery and preparation method thereof

The lithium-ion batteries obtained in Example B1 to Example B6 respectively contain cathode plates prepared from the cathode lithium-supplementing materials of Examples A1 to A6.

Preparation method of each of the lithium-ion batteries was performed by the following steps:
cathode plate: the cathode lithium-supplementing materials of Examples A1 to A6 each were mixed with lithium cobalt according to a mass ratio of 5:95 to obtain a mixture, the mixture was mixed with a polyvinylidene fluoride and a SP-Li according to a mass ratio of 93:3:4 by ball milling and stirring to obtain a cathode slurry, the cathode slurry was coated on a surface of an aluminum foil, which was then rolled and vacuum dried overnight at 110°C to obtain the cathode plate;
anode: lithium metal plate;
electrolyte: ethylene carbonate and ethyl methyl carbonate were mixed in a volume ratio of 3:7, and LiPF6 was added to form an electrolyte, and a concentration of LiPF6 was 1 mol/L;
separator: polypropylene microporous separator.

Lithium-ion battery assembly: the lithium-ion batteries of Example B1 to Example B6 were assembled in an inert atmosphere glove box in an order of lithium metal plate-separator-electrolyte-cathode plate.

### Comparative Example B1 to Comparative Example B4

### Lithium-ion battery and preparation method thereof

The lithium-ion batteries obtained in Comparative Example B1 to Comparative Example B4 respectively contain cathode plates prepared from cathode lithium-supplementing materials of Comparative Examples A1 to A4.

Preparation method of each of the lithium-ion batteries was performed by the following steps:
cathode plate: the cathode lithium-supplementing materials of Comparative Examples A1 to A4 each were mixed with lithium cobalt according to a mass ratio of 5:95 to obtain a mixture, the mixture was mixed with a polyvinylidene fluoride and a SP-Li according to a mass ratio of 93:3:4 by ball milling and stirring to obtain a cathode slurry, the cathode slurry was coated on a surface of an aluminum foil, which was then rolled and vacuum dried overnight at 110°C to obtain the cathode plate;
anode: lithium metal plate;
electrolyte: ethylene carbonate and ethyl methyl carbonate were mixed in a volume ratio of 3:7, and LiPF6 was added to form an electrolyte, and a concentration of LiPF6 was 1 mol/L;
separator: polypropylene microporous separator.

Lithium-ion battery assembly: the lithium-ion batteries of Comparative example B1 to Example B4 were assembled in an inert atmosphere glove box in an order of lithium metal plate-separator-electrolyte-cathode plate.

### Performance test

(I) According to the preparation process of Examples A1-A6 and Comparative Examples A1-A4, the adhesion between the product and the sagger and the stability of the sagger were observed.
(II) The electrochemical performance of the lithium-ion batteries of Examples B1-B6 and Comparative Examples B1 and B4 was tested. The test conditions were as follows: the assembled batteries were placed at room temperature for 24 hrs before the charge and discharge performance. The charge and discharge voltage was 2.7 V to 4.3 V.

### Result analysis

(I)According to the preparation process of Examples A1-A6 and Comparative Examples A1-A4, the adhesion between the product and the sagger and the stability of the sagger were observed as shown in Table 1. It can be seen that the products prepared in Examples A1-A6 were not adhered to the sagger and the sagger was stable; while the products prepared in Comparative Examples A1-A4 were adhered to the sagger. If an 80 corundum sagger was adopted, the sagger would crack. If a 99 corundum sagger was adopted, the sagger would not crack, but the properties were unstable. In a case that lithium peroxide was used as the main lithium source, no matter whether the 80 corundum sagger or the 99 corundum sagger was used, the sagger was stable after firing, the product Li had no loss, and the capacity was well exerted. In a case that lithium hydroxide was used as the main lithium source, taken Comparative Examples A1 and A4 as examples, when 80 corundum sagger was used, because the inclusion of a large amount of silicon oxide, it reacted with the strong base LiOH at high temperature and consumed Li, causing the sagger to crack, and the active lithium that could be intercalated was lost, and the capacity per gram was reduced; and taken Comparative Examples A2 and A3, the 99 corundum sagger was used, which did not crack after firing, but lithium nitrate or lithium hydroxide caused the material to be tightly adhered to the sagger and difficult to demold, which cannot meet the needs of automated production.

**Table 1**

| No. | Sagger material | Adhesion between product and sagger | Sagger stability |
|---|---|---|---|
| Example A1 | 80 Corundum sagger | Not adhered | Sagger stable |
| Example A2 | 80 Corundum sagger | Not adhered | Sagger stable |
| Example A3 | 80 Corundum sagger | Not adhered | Sagger stable |
| Example A4 | 99 Corundum sagger | Not adhered | Sagger stable |
| Example A5 | 99 Corundum sagger | Not adhered | Sagger stable |
| Example A6 | 80 Corundum sagger | Not adhered | Sagger stable |
| Comparative example A1 | 80 Corundum sagger | Adhered | Sagger cracking |
| Comparative example A2 | 99 Corundum sagger | Adhered | Sagger not cracking |
| Comparative example A3 | 99 Corundum sagger | Adhered | Sagger not cracking |
| Comparative example A4 | 80 Corundum sagger | Adhered | Sagger cracking |

(II) The electrochemical performances of the lithium-ion batteries of Example B1 to Example B6 and the lithium-ion batteries of Comparative Example B1, Comparative Example B4, and Blank Group LCO were tested. The test conditions were as follows: the assembled batteries were placed at room temperature for 24 hrs before the charge and discharge test were performed. The charge and discharge voltage was 2.7 V to 4.3 V. The results were shown in Table 2. It can be seen that the charging capacities per gram of the lithium-ion batteries of Example B1 to Example B6 were 179.5 mAh/g to 183 mAh/g; while the charging capacities per gram of the lithium-ion batteries of Comparative Example B1 and Comparative Example B4 were 173 mAh/g and 176 mAh/g, respectively, and the charging capacity per gram of the blank group LCO was 161 mAh/g. It can be seen that the cathode lithium-supplementing material prepared by the preparation method of the cathode lithium-supplementing material provided by the present application can improve the electrochemical performance of the lithium-ion battery when assembled into a battery for use.

**Table 2**

| No. | Charging capacity per gram |
|---|---|
| Example B1 | 183 mAh/g |
| Example B2 | 182.5 mAh/g |
| Example B3 | 180 mAh/g |
| Example B4 | 181.2 mAh/g |
| Example B5 | 182 mAh/g |
| Example B6 | 179.5 mAh/g |
| Comparative Example B1 | 173 mAh/g |
| Comparative Example B4 | 176 mAh/g |
| Blank Group LCO | 161 mAh/g |

In summary, the cathode lithium-supplementing material provided in the first aspect of embodiments of the present application comprises the lithium-containing core and the coating layer coated on the surface of the lithium-containing core, the material of the coating layer is selected from the semi-finished carbon layer containing hydroxyls. The provided coating layer, on the one hand, plays a role in isolating harmful components such as water and carbon dioxide in the air, thereby effectively ensuring the stability of the lithium-rich material contained in the cathode composite material layer; on the other hand, the coating layer is the semi-finished carbon layer containing hydroxyls, which has a partial conductivity function and can improve the conductivity of the cathode lithium-supplementing material; moreover, the semi-finished carbon layer containing hydroxyls has high toughness, which is conducive to completely coating the lithium-containing core, ensures the effect of isolating the cathode lithium-supplementing material from water vapor during storage, thereby having stable performance and being beneficial for the widespread application.

The above description is only preferred embodiments of the present application and is not intended to limit the present application. For those skilled in the art, the present application can have various modifications and changes. Any modifications, equivalent substitutions, and improvements made within the spirit and principles of the present application should fall within the protection scope of the present application.

## Claims

1. A cathode lithium-supplementing material, **characterized by** comprising a lithium-containing core and a coating layer coated on a surface of the lithium-containing core, wherein a material of the coating layer is selected from a semi-finished carbon layer containing hydroxyls.

2. The cathode lithium-supplementing material according to claim 1, wherein a structural formula of the semi-finished carbon layer is C_{d}Hₑ(OH)_{f}, wherein 0 < d < 6, 0 < e < 3, and 0 < f < 4.

3. The cathode lithium-supplementing material according to claim 1, wherein a structural formula of the lithium-containing core is LiₐFeO_{b}·cMₓO_{y}, wherein c in the structural formula represents a molar number, and 4.5≤a≤5.5; a and b satisfy a formula a=2b-3; 1≤y/x≤2.5; and wherein M is at least one element selected from Co, Ni, Mn, V, Cu, Mo, Al, Ti, Mg, Zr, and Si.

4. The cathode lithium-supplementing material according to claim 1, wherein a particle size of the cathode lithium-supplementing material is 1 µm to 20 µm; and/or,
a thickness of the coating layer is 5 nm to 100 nm.

5. The cathode lithium-supplementing material according to claim 1, wherein a specific surface area of the cathode lithium-supplementing material is 1 m²/g to 10 m²/g.

6. A preparation method of a cathode lithium-supplementing material, **characterized by** comprising the following steps:
preparing a lithium peroxide;
mixing an iron source, a lithium source, and a doping element source according to an element stoichiometry in a molecular formula LiₐFeO_{b}·cMₓO_{y}, to obtain a precursor, wherein in the molecular formula, c is a molar number, 4.5≤a≤5.5, a and b satisfy a formula a=2b-3, 1≤y/x≤2.5, and M is at least one element selected from Co, Ni, Mn, V, Cu, Mo, Al, Ti, Mg, Zr, and Si;
performing a semi-liquid phase sintering treatment on the precursor to obtain a lithium-containing core;
providing a carbon source for semi-dehydration carbonization treatment under an inert atmosphere to obtain a semi-carbonized carbon source; and
performing fusion treatment on the lithium-containing core and the semi-carbonized carbon source to form a coating layer on a surface of the lithium-containing core, whereby obtaining the cathode lithium-supplementing material.

7. The preparation method of the cathode lithium-supplementing material according to claim 6, wherein the step of preparing the lithium peroxide comprises:
providing and mixing an anhydrous lithium hydroxide and hydrogen peroxide, and performing a first heating treatment to obtain a first mixture;
mixing the first mixture with an organic solvent to obtain a lithium peroxide precipitate containing a crystal water; and
performing a second heating treatment on the lithium peroxide precipitate containing the crystal water to obtain the lithium peroxide.

8. The preparation method of the cathode lithium-supplementing material according to claim 7, wherein a molar ratio of the anhydrous lithium hydroxide to the hydrogen peroxide is 1.1 to 1.2:1; and/or,
a volume ratio of the organic solvent to the hydrogen peroxide is 0.8 to 1.4:1.

9. The preparation method of the cathode lithium-supplementing material according to claim 7, wherein a temperature of the first heating treatment is 90°C to 120°C, and a time of the first heating treatment is 15 min to 60 min; and/or,
a temperature of the second heating treatment is 400°C to 450°C, and a time of the second heating treatment is 1 hr to 5 hrs.

10. The preparation method of the cathode lithium-supplementing material according to claim 6, wherein the lithium source further comprises at least one of lithium nitrate, lithium carbonate, lithium acetate, lithium oxalate, lithium borate, lithium phosphate, lithium chloride, lithium hydroxide, lithium peroxide, and lithium oxide; and/or,
the iron source comprises an iron salt; and/or,
the doping element source comprises at least one of a Co source, a Ni source, a Mn source, a V source, a Cu source, a Mo source, an Al source, a Ti source, a Mg source, a Zr source, and a Si source.

11. The preparation method of the cathode lithium-supplementing material according to claim 6, wherein a mass percentage of lithium peroxide in the lithium source is 30 wt% to 70 wt%.

12. The preparation method of the cathode lithium-supplementing material according to claim 6, wherein a temperature of the semi-liquid phase sintering treatment is performed at a temperature of 600°C to 950°C for a time of 2 hrs to 15 hrs.

13. The preparation method of the cathode lithium-supplementing material according to claim 6, wherein in the step of performing the semi-liquid phase sintering treatment, a mullite sagger or a corundum sagger is used to perform the semi-liquid phase sintering treatment in a roller kiln or a rotary kiln.

14. The preparation method of the cathode lithium-supplementing material according to claim 6, wherein in the step of mixing the iron source, the lithium source, and the doping element source, a high-speed shearing method is used for the mixing, and the high-speed shearing is performed at a speed of 2000 rpm to 5000 rpm for a time of 20 min to 40 min.

15. The preparation method of the cathode lithium-supplementing material according to claim 6, wherein the semi-dehydration carbonization treatment is performed at a temperature of 300°C to 400°C for a time of 2 hrs to 6 hrs.

16. The preparation method of the cathode lithium-supplementing material according to claim 6, wherein a mass ratio of the lithium-containing core to the carbon source is 100 : (10 to 20).

17. The preparation method of the cathode lithium-supplementing material according to claim 6, wherein the carbon source comprises at least one of glucose, sucrose, and a polyethylene glycol.

18. The preparation method of the cathode lithium-supplementing material according to claim 6, wherein the fusion treatment is performed at a speed of 1500 rpm to 5000 rpm for a time of 5 min to 60 min.

19. A cathode plate, **characterized in that** the cathode plate comprises a cathode current collector and a cathode active material layer located on the cathode current collector, the cathode active material layer comprises a cathode active material, a binder, a conductive agent, and a cathode lithium-supplementing material, wherein the cathode lithium-supplementing material is selected from the cathode lithium-supplementing material according to any one of claims 1-5 or prepared by the preparation method of the cathode lithium-supplementing material according to any one of claims 6-18.

20. The cathode plate according to claim 19, wherein,
a mass percentage of the cathode lithium-supplementing material in the cathode active material layer is 0.5 wt% to 15 wt%; and/or,
a mass percentage of the conductive agent in the cathode active material layer is 0.2 wt% to 7 wt%; and/or,
a mass percentage of the binder in the cathode active material layer is 0.3 wt% to 7 wt%.

21. A secondary battery, **characterized in that** the secondary battery comprises the cathode plate according to claim 19 or 20.
